Europäisches Patentamt

European Patent Office

Office européen des brevets

(11) Publication number: **0 127 399**
**A2**

# (12) EUROPEAN PATENT APPLICATION

(21) Application number: 84303366.3

(22) Date of filing: 17.05.84

(51) Int. Cl.³: **C 01 B 33/28**
**B 01 J 29/06**

(30) Priority: 26.05.83 US 498224

(43) Date of publication of application:
05.12.84 Bulletin 84/49

(84) Designated Contracting States:
BE DE FR GB IT NL SE

(71) Applicant: MOBIL OIL CORPORATION
150 East 42nd Street
New York New York 10017(US)

(72) Inventor: Chu, Pochen
1173 Ollerton Road
West Deptford, N.J. 08066(US)

(72) Inventor: Vartuli, James Clarke
320 Ponds Road
West Chester, Pa. 19380(US)

(72) Inventor: Herbst, Joseph Anthony
60 Bryant Road
Turnersville, N.J. 08012(US)

(74) Representative: Grundy, Derek George Ritchie et al,
CARPMAELS & RANSFORD 43, Bloomsbury Square
London WC1A 2RA(GB)

(54) Zeolite synthesis.

(57) The present invention elates to a method for synthesizing porous crystalline zeolite molecular sieves by first preparing a particular zeolite-forming reaction mixture comprising among other conventional components an alumina source which allows only a gradual release of aluminum or aluminate ions into the reaction mixture as a result of its limited solubility in the reaction mixture. Zeolites produced in this manner can have unique structure and/or crystal morphology and possess especially desirable catalytic properties when used to promote catalytic conversion of organic compounds.

EP 0 127 399 A2

*Å*

## ZEOLITE SYNTHESIS

This invention relates to a new method for synthesis of porous crystalline zeolite molecular sieves, to the zeolites so synthesized and to use thereof as catalyst components for organic compound, e.g. hydrocarbon compound and oxygenated derivatives thereof, conversion reactions. More particularly, it relates to synthesizing porous crystalline zeolites using alumina sources of limited or controlled solubility in the zeolite-forming reaction mixture. The porous crystalline zeolites synthesized by the present method exhibit different chemical and physical properties than the zeolites of identical framework orientation synthesized by known methods. The zeolites synthesized hereby also exhibit numerous improved properties, both physical and chemical, when compared to the zeolites of identical framework orientation synthesized by known methods.

Zeolitic materials, both natural and synthetic, have been demonstrated in the past to have catalytic properties for various types of hydrocarbon conversion. Certain zeolitic materials are ordered, porous crystalline aluminosilicates having a definite crystalline structure as determined by X-ray diffraction, within which there are a large number of smaller cavities which may be interconnected by a number of still smaller channels or pores. These cavities and pores are uniform in size within a specific zeolitic material. Since the dimensions of these pores are such as to accept for adsorption molecules of certain dimensions while rejecting those of larger dimensions, these materials have come to be known as "molecular sieves" and are utilized in a variety of ways to take advantage of these properties.

Such molecular sieves, both natural and synthetic, include a wide variety of positive ion-containing crystalline aluminosilicates. These aluminosilicates can be described as rigid three-dimensional frameworks of $SiO_4$ and $AlO_4$ in which the tetrahedra are cross-linked by the sharing of oxygen atoms whereby the ratio of the total aluminum and silicon atoms to oxygen atoms is 1:2. The electrovalence of the tetrahedra containing aluminum is balanced by the inclusion in the crystal of a cation, for example an alkali metal or an alkaline earth metal cation. This can be expressed wherein the ratio of aluminum to the number of various cations, such as Ca/2, Sr/2, Na, K or Li, is equal to unity. One type of cation may be exchanged either entirely or partially with another type of cation utilizing ion exchange techniques in a conventional manner. By means of such cation exchange, it has been possible to vary the properties of a given aluminosilicate by suitable selection of the cation. The spaces between the tetrahedra are occupied by molecules of water prior to dehydration.

Prior art techniques have resulted in the formation of a great variety of synthetic zeolites. The zeolites have come to be designated by letter or other convenient symbols, as illustrated by zeolite A (U. S. Patent 2,882,243), zeolite X (U. S. Patent 2,882,244), zeolite Y (U. S. Patent 3,130,007), zeolite ZK-5 (U. S. Patent 3,247,195), zeolite ZK-4 (U. S. Patent 3,314,752), zeolite ZSM-5 (U. S. Patent 3,702,886), zeolite ZSM-11 (U. S. Patent 3,709,979), zeolite ZSM-12 (U. S. Patent 3,832,449), zeolite ZSM-20 (U. S. Patent 3,972,983), zeolite ZSM-35 (U. S. Patent 4,016,245), zeolite ZSM-38 (U. S. Patent 4,046,859), and zeolite ZSM-23 (U. S. Patent 4,076,842) merely to name a few.

Publications teach that virtually any zeolite may be produced from a number of silica sources. Such silica sources include, for example, high temperature produced fumed silicas, inorganic or organic synthetic silicas which have either been precipitated and dried or left as colloidal solutions, water soluble silicates, silicic acids, non-synthetic silicas such as sand, rice hulls, or silica-rich by-products such as "fly ash" residue of coal combustion. The very same publications teach, whether expressly or implicitly, the desirability and at times the necessity of using in the zeolite-forming reaction mixture an alumina source which is a homogeneous solution of aluminum or aluminate ions. More specifically, it is taught that at the moment of zeolite conception, i.e. the instant when the sources of $SiO_2$ and $Al_2O_3$ are combined to form the initial gel, sol, or solution which eventually leads to the formation of the desired zeolite by whatever mechanism, the source of alumina ought to be a homogenous solution of aluminum or aluminate ions. For example, the preferred alumina source is a pre-reacted solution of a water insoluble alumina monohydrate and/or trihydrate combined with or digested with an alkali metal or alkaline-earth hydroxide. One preferred alumina source can be a water soluble aluminum salt, e.g. $Al_2(SO_4)_3 \cdot 4H_2O$, $NaAlO_2$, etc.

A wide variety of alumina sources for use in zeolite synthesis are described in the patent literature. In patents where a broad listing of alumina sources is given, there may be sources listed which, in fact, have limited solubility. Such a prophetic listing appears in British Patent 1,567,948, for example. In none of these patents, including British Patent, 1,567,948, are alumina sources of limited solubility employed. In fact, in all of such patents it is taught that the alumina source is "dissolved" in the reaction mixture from which zeolite crystallization is to be realized.

The present invention is directed to a new concept in porous crystalline zeolite molecular sieve synthesis whereby alumina sources which exhibit a very limited solubility in water and a kinetically slow dissolution into the reacting mother liquor under zeolite synthesis conditions, are utilized to produce, as synthesized, known molecular sieve materials of silica/alumina mole ratios higher than normally obtained as well as molecular sieves not before known.

Specifically, the present invention provides a method for synthesizing porous crystalline zeolite molecular sieves by first preparing an aqueous reaction mixture having a particularly defined composition and by thereafter maintaining that reaction mixture under particular reaction conditions, i.e. a temperature of from 60°C to 350°C and a pH of from 7 to 14.0, until crystals of the porous crystalline zeolite molecular sieve are formed. The aqueous reaction mixture has a composition, in terms of mole ratios of oxides and ions, as follows:

$$SiO_2/Al_2O_3 = \text{at least } 3.5$$
$$H_2O/SiO_2 = 5 \text{ to } 1,000$$
$$OH^-/SiO_2 = 0.005 \text{ to } 3.0$$
$$M^+/SiO_2 = 0 \text{ to } 10$$
$$R^+/SiO_2 = 0 \text{ to } 10$$

wherein $M^+$ represents alkali metal or alkaline earth metal ions and $R^+$ represents organic cations containing a Group VA element. $Al_2O_3$ in such a reaction mixture is provided at least in part by a deliberately added alumina source of limited solubility in the reaction mixture. Such an alumina source exhibits a Degree of Solubility (as defined hereinafter) of less than 20 weight percent in water and less than 90 weight percent in caustic solution.

The critical element in the zeolite synthesis process is the use of an $Al_2O_3$ source of limited solubility. Such an $Al_2O_3$ source allows only a gradual release of aluminum or aluminate ions into the reaction mixture (sol, gel or solution) as a result of the interrelationship of the time, temperature and pH conditions under which the reaction mixture is maintained.

Known and new zeolite molecular sieves synthesized by the present method are different from and, in certain properties, superior to those materials prepared by known methods. Some of the differences and, as will be apparent, superior properties of zeolites prepared hereby include (1) at a particular nucleation and/or crystallization rate, the product zeolite of the present method will have a higher silica/alumina mole ratio; (2) the aluminum distribution throughout the resulting zeolite structure will be more uniform; (3) initial and long term catalytic activity and/or selectivity of catalysts comprising zeolites synthesized by the present method are improved when compared to like catalysts comprising zeolites of identical framework orientation prepared by known methods; (4) final product zeolite particle size and/or morphology are different; (5) the thermal and/or hydrothermal stability of the zeolites prepared hereby may be improved; and (6) manufacturing costs are, in many instances, reduced since many sources of alumina with reduced solubility are less expensive per unit weight of contained alumina than readily soluble sources. As indicated the porous crystalline zeolite molecular sieve materials synthesized in accordance with this invention are useful as catalysts to promote the catalytic conversion of organic compounds.

In accordance with the present invention, at least part, preferably at least 50 percent by weight and most perferably at least 90 percent by weight of the $Al_2O_3$ in the zeolite-forming reaction mixture, is provided by an alumina source which is only sparingly soluble in the zeolite-forming reaction mixture. Thus alumina sources employed in the synthesis method herein exhibit a limited degree and rate of solubility in both water and caustic solution. Solubility of the alumina source can conveniently be measured as "Degree of Solubility", which is defined as the weight percent of aluminum ions provided to the subject solution at particular conditions of temperature and time by the subject source of alumina. For purposes of this invention, Degree of Solubility of an alumina source in water is determined by the following solubility test: Five grams of alumina source (100% solid basis) are mixed and slurried with 100 grams of distilled water. The slurried mixture is heated to 100°C and maintained at this temperature for 24 hours. The mixture is then filtered while at about 100°C. Degree of Solubility is then determined by analyzing the filtrate for aluminium ion content and drying and weighing the filtered material.

Degree of Solubility of an alumina source in caustic solution is determined by the following solubility test: Five grams of alumina source (100% solid basis) are mixed and slurried with 100 grams of 5 weight percent sodium hydroxide solution (5 grams of anhydrous sodium hydroxide dissolved in 95 grams of distilled water). The slurried mixture is heated to 100°C and maintained at this temperature for 24 hours. The mixture is then filtered while at about 100°C. Degree of solubility is then determined by analyzing the filtrate for aluminum ion content and drying and weighing the filtered material.

For either caustic or water solution,

$$\text{Degree of Solubility} = \left( 5 - \frac{\text{Remaining Undissolved Alumina, grams}}{5} \right) \times 100\% \text{ by weight.}$$

Alumina sources useful in the present invention are those which have a Degree of Solubility in water which is less than about 20% by weight, preferably less than about 5% by weight and a Degree of Solubility in caustic solution which is less than about 90% by weight, preferably less than about 50% by weight.

Commonly used sources of alumina for conventional zeolite synthesis, such as, for example, sodium aluminate or aluminum sulfate, exhibit Degrees of Solubility by either of the above solubility tests of 100 weight percent. In fact, both sodium aluminate and aluminum sulfate are essentially instantaneously 100 weight percent soluble in distilled water at room temperature.

On the other hand, alumina sources which are found to satisfy the solubility limitations hereinbefore specified and which thereby find utility in the present invention include the high temperature transition aluminas, such as, for example, kappa, theta, iota and the two delta forms of alumina; transition aluminas, such as, for example, gamma, eta and chi forms of alumina; and the tri- and monohydrated aluminas which are not predigested or reacted with alkaline earth or alkali metal hydroxide, strong mineral acids, e.g. hydrogen fluoride, etc. Such hydrated aluminas useful herein include the trihydrates known as gibbsite, bayerite and nordstrandite, and the monohydrates known as boehmite and diaspore.

A wide variety of zeolite structure types can be prepared using the particular low solubility alumina sources hereinbefore described. For example, the framework orientation of the porous crystalline zeolite molecular sieves synthetized in accordance with this invention may be that of, as non-limiting examples, zeolites ZSM-5, ZSM-11, ZSM-5/ZSM-11 intermediate, ZSM-12, ZSM-22, ZSM-23, ZSM-34, ZSM-35, ZSM-38, ZSM-45, ZSM-48, ZSM-50, Beta, synthetic offretite or synthetic erionite.

U.S. Patents 3,702,886 and Re. 29,948, describe and claim ZSM-5 and a crystalline material with an X-ray diffraction pattern of ZSM-5, respectively, and also describe conventional methods of preparing zeolites of the ZSM-5 structure type.

The ZSM-5/ZSM-11 intermediate is described in U.S. Patent 4,229,424, which also describes a conventional method for preparing zeolites of this structure type.

ZSM-11 is more particularly described in U.S. Patent 3,709,979, which also describes a conventional method for preparing zeolites of this structure type.

ZSM-12 is more particularly described in U.S. Patent 3,832,449, which also describes a conventional method for preparing zeolites of this structure type.

ZSM-23 is more particularly described in U.S. Patent 4,076,842, which also describes a conventional method for preparing zeolites of this structure type.

ZSM-34 is more particularly described in U.S. Patent 4,086,186, which also describes a conventional method for preparing zeolites of this structure type.

ZSM-35 is more particularly described in U.S. Patent 4,016,245, which also describes a conventional method for preparing zeolites of this structure type.

ZSM-38 is more particularly described in U.S. Patent 4,046,859, which also describes a conventional method for preparing zeolites of this structure type.

ZSM-48 is more particuarly described in U.S. Patent 4,375,573, which also describes a conventional method for preparing zeolites of this structure type.

Zeolite Beta is described in U.S. Patents 3,308,069 and Re. 28,341, which also describes a conventional method for preparing zeolites of this structure type.

Zeolite ZSM-22 has a composition on an anhydrous basis in terms of moles of oxides per 100 moles of silica as follows:

$$(0.01\text{-}2.0)Q_2O:(0.0\text{-}2.0)M_{2/n}O:(0.0\text{-}5)Al_2O_3:100\ SiO_2$$

wherein $Q_2O$ is the oxide form of an organic compound containing an element of Group VA of the Periodic Table of Elements, e.g. N or P, containing at least one alkyl or aryl group having two or more carbon atoms, and M is an alkali metal or an alkaline earth metal having the valence n.

Zeolite ZSM-22 has a definite X-ray diffraction pattern distinguishing it from other zeolites with most significant lines as follows:

| Interplanar d-Spacings ($\overset{o}{A}$) | Relative Intensity ($I/I_o$) |
|---|---|
| 10.9 ± 0.2 | M-VS |
| 8.7 ± 0.16 | W |
| 6.94 ± 0.10 | W-M |
| 5.40 ± 0.08 | W |
| 4.58 ± 0.07 | W |
| 4.36 ± 0.07 | VS |
| 3.68 ± 0.05 | VS |
| 3.62 ± 0.05 | S-VS |
| 3.47 ± 0.04 | M-S |
| 3.30 ± 0.04 | W |
| 2.74 ± 0.02 | W |
| 2.52 ± 0.02 | W |

These X-ray diffraction values were determined by standard techniques. The radiation was the K-alpha doublet of copper and a diffractometer equipped with a scintillation counter and an associated computer was used. The peak heights, I, and the positions as a function of 2 theta, where theta is the Bragg angle, were determined using algorithms on the computer associated with the spectrometer. From these the relative intensities, 100 $I/I_o$, where $I_o$ is the intensity of the strongest line or peak, and d (obs.) the interplanar spacing in Angstrom Units ($\overset{o}{A}$), corresponding to the recorded lines were determined. The relative intensities are given in terms of the symbols VS = very strong, S = strong, M = medium, W = weak, etc. It should be understood that this X-ray diffraction pattern is characteristic of all the species of ZSM-22 zeolite compositions. Ion exchange of the alkali metal cations with other ions results in a zeolite which reveals substantially the same X-ray diffraction pattern with some minor shifts in interplanar spacing and variation in relative intensity. Other minor variations can occur, depending on the silica to alumina ratio of the particular sample, as well as its degree of thermal treatment.

Aluminosilicate zeolite ZSM-22 can be prepared in conventional manner from a reaction mixture containing water and sources of silica, $Q_2O$, an alkali metal oxide, e.g., sodium, potassium or cesium, and alumina, and having a composition, in terms of mole ratios of oxides, falling within the following ratios:

| Reactants | Broad | Preferred |
|---|---|---|
| $SiO_2/Al_2O_3$ | 20 to infinity | 30-1000 |
| $M_{2/n}O/(Q_2O+M_{2/n}O)$ | 0 to 0.95 | 0.1 to 0.8 |

wherein $Q_2O$ is the oxide form of an organic compound of an element of Group VA of the Periodic Table, e.g. N or P, containing at least one alkyl or aryl group having two or more carbon atoms, and M is an alkali or alkaline earth metal of valence n, and maintaining the mixture at crystallization temperature until crystals of the ZSM-22 zeolite are formed. Thereafter, the crystals can be separated from the liquid by any conventional means, washed and recovered.

Zeolite ZSM-45 has a composition, in the as-synthesized form, in terms of moles of anhydrous oxides per mole of alumina as follows:

$$(0.8-1.8)R_2O:(0.0-0.3)Na_2O:(0.0-0.5)K_2O:Al_2O_3:xSiO_2$$

wherein R is an organic cation derived from a 2-(hydroxyalkyl) trialkylammonium compound where alkyl is composed of one or two carbon atoms and x is greater than 8, and wherein the zeolite is characterized by a distinctive X-ray diffraction pattern, determined in the same manner as described hereinbefore for zeolite ZSM-22, substantially as shown below:

| Interplanar d-Spacings ($\overset{o}{A}$) | Relative Intensity, $I/I_0$ |
|---|---|
| $10.16 \pm 0.18$ | Weak |
| $8.02 \pm 0.14$ | Strong-Very Strong |
| $7.56 \pm 0.14$ | Weak |
| $6.55 \pm 0.12$ | Medium-Very Strong |
| $5.66 \pm 0.10$ | Weak |
| $5.50 \pm 0.10$ | Weak |
| $5.07 \pm 0.09$ | Medium-Strong |

| | |
|---|---|
| 4.95 ± 0.09 | Weak |
| 4.21 ± 0.08 | Medium-Strong |
| 4.01 ± 0.07 | Strong-Very Strong |
| 3.78 ± 0.07 | Medium-Strong |
| 3.60 ± 0.06 | Weak |
| 3.54 ± 0.06 | Weak-Medium |
| 3.42 ± 0.06 | Weak |
| 3.27 ± 0.06 | Medium |
| 3.11 ± 0.06 | Medium-Strong |
| 3.03 ± 0.05 | Weak |
| 2.812 ± 0.05 | Weak |
| 2.751 ± 0.05 | Medium-Strong |
| 2.583 ± 0.05 | Weak |
| 2.535 ± 0.05 | Weak |
| 2.521 ± 0.05 | Weak |
| 2.475 ± 0.04 | Weak |
| 2.405 ± 0.04 | Weak |
| 2.362 ± 0.04 | Weak |
| 2.251 ± 0.04 | Weak |
| 2.181 ± 0.04 | Weak |
| 2.133 ± 0.04 | Weak |
| 2.097 ± 0.04 | Weak |
| 2.029 ± 0.04 | Weak |
| 2.006 ± 0.03 | Weak |
| 1.889 ± 0.03 | Weak |
| 1.859 ± 0.03 | Weak |
| 1.843 ± 0.03 | Weak |
| 1.815 ± 0.03 | Weak |
| 1.765 ± 0.03 | Weak |
| 1.721 ± 0.03 | Weak |
| 1.710 ± 0.03 | Weak |
| 1.650 ± 0.03 | Weak |
| 1.637 ± 0.03 | Weak |
| 1.617 ± 0.03 | Weak |
| 1.606 ± 0.03 | Weak |
| 1.559 ± 0.03 | Weak |

It should be understood that this X-ray diffraction pattern is characteristic of all the species of zeolite ZSM-45 compositions. The sodium form as well as other cationic forms reveal substantially the same pattern with some minor shifts in interplanar spacing and variation in relative intensity. Other minor variations can occur, depending on the silicon to aluminum ratio of the particular sample, as well as its degree of thermal treatment.

Aluminosilicate zeolite ZSM-45 can be prepared in conventional manner from a reaction mixture containing water and sources of alkali metal ions (M) which are Na and K, an oxide of aluminum, an oxide of silicon, and an organic cation (R) derived from a 2-(hydroxyalkyl)trialkylammonium compound wherein alkyl is composed of of one or two carbon atoms. Such a reaction mixture can have a composition, in terms of mole ratios of oxides, falling within the following ranges:

| Reactants | Useful | Preferred |
|---|---|---|
| $SiO_2/Al_2O_3$ | 10-150 | 15-80 |
| $OH^-/SiO_2$ | 0.3-1.0 | 0.3-0.8 |
| $H_2O/OH^-$ | 20-100 | 20-80 |
| R/R+M | 0.1-0.8 | 0.2-0.7 |
| K/K+Na | 0.0-0.8 | 0.05-0.3 |

wherein R and M are as above defined.

Crystallization of the aluminosilicate zeolite ZSM-45 can be carried out at either static or stirred condition in a suitable reactor vessel, such as for example, polypropylene jars or teflon lined or stainless steel autoclaves. A useful range of temperatures for crystallization is from about 80°C to about 350°C for a time of about 12 hours to about 145 days. Thereafter, the crystals can be separated from the liquid and recovered. It should be realized that the reaction mixture component oxides can be supplied from more than one source. The reaction mixture can be prepared either batchwise or continuously. Crystal size and crystallization time of the crystalline zeolite ZSM-45 will vary with the nature of the reaction mixture employed and the crystallization conditions.

F-2123        -12-

Zeolite ZSM-50 has a composition on an anhydrous basis in terms of moles of oxides per 100 moles of silica as follows:

$(0-4)R_2O:(0-10)M_{2/n}O:(1-5)Al_2O_3: 100\ SiO_2$

wherein M is an alkali metal or alkaline earth metal, n is the valence of M, and R is an organic cation of a Group VA element of the Periodic Table of the Elements (Sargent-Welch Scientific Company), particularly that derived from a linear diquaternary ammonium, phosphonium, arsonium, or stibonium compound.

Catalytically active members of the family of the ZSM-50 crystals have a definite X-ray diffraction pattern which distinguishes them from other crystalline materials. The X-ray diffraction pattern of zeolite ZSM-50 has the following significant lines determined in the same manner as described hereinbefore for zeolite ZSM-22:

| Interplanar d-Spacings ($\overset{o}{A}$) | Relative Intensity, $I/I_o$ |
|---|---|
| 20.1 ± .3 | W |
| 11.1 ± .17 | S |
| 10.1 ± .16 | M |
| 9.7 ± .14 | W |
| 5.77 ± .09 | W |
| 5.61 ± .09 | W |
| 4.64 ± .07 | M |
| 4.35 ± .07 | M |
| 4.30 ± .07 | VS |
| 4.00 ± .06 | S |
| 3.85 ± .06 | M |
| 3.70 ± .06 | M |
| 3.42 ± .05 | W |
| 3.35 ± .05 | W |
| 3.27 ± .05 | M |
| 3.24 ± .05 | W |
| 2.94 ± .04 | W |
| 2.53 ± .04 | W |

It should be understood that this X-ray diffraction pattern is characteristic of all the species of zeolite ZSM-50 compositions. The sodium form as well as other cationic forms reveal substantially the same pattern with some minor shifts in interplanar spacing and variation in relative intensity. Other minor variations can occur, depending on the silicon to aluminum ratio of the particular sample, as well as its degree of thermal treatment.

The aluminosilicate zeolite ZSM-50 can be prepared in conventional manner from a reaction mixture containing water and sources of alkali metal or alkaline earth metal ions (M), an oxide of aluminum, an oxide of silicon, and an organic cation (R) of a Group VA element of the Periodic Table. Such a reaction mixture can have composition, in terms of mole ratios of oxides, falling within the following ranges:

| Reactants | Useful | Preferred |
|---|---|---|
| $SiO_2/Al_2O_3$ | 20-100 | 30-90 |
| $OH^-/SiO_2$ | 0.1-0.6 | 0.1-0.3 |
| $R^+/SiO_2$ | 0.05-0.6 | 0.1-0.3 |
| $M^+/SiO_2$ | 0.01-1.0 | 0.1-0.6 |

wherein R and M are as above defined.

Crystallization of the aluminosilicate zeolite ZSM-50 can be carried out at either static or stirred condition in a suitable reactor vessel, such as for example, polypropylene jars or teflon lined or stainless steel autoclaves. The total useful range of temperatures for crystallization is from about 100°C to about 200°C for a time of about 48 hours to about 15 days. Thereafter, the crystals are separated from the liquid and recovered. The composition can be prepared utilizing materials which supply the appropriate oxides. Such compositions may include sodium silicate, silica hydrosol, silica gel, silicic acid, sodium hydroxide, a source of aluminum, and an appropriate organic compound. The organic compounds contain an element of Group VA, such as nitrogen or phosphorus. The preferred organic compound is the diquaternary compound expressed by the formula:

$I(CH_3)_3N(CH_2)_6N(CH_3)_3I.$

Of all of the foregoing zeolite structure types, the synthesis method of the present invention is especially suitable for preparing zeolites having a Constraint Index between about 1 and 12. Constraint Index is a characteristic of a type of zeolite which exhibits constrained access to, and egress from, the zeolite intracrystalline free space by virtue of having a pore dimension greater than about 5 Angstroms and pore windows of about a size such as would be provided by 10-membered rings of oxygen atoms. Constraint Index and the means for its determination are described more fully in the hereinbefore-referenced U.S. Patent No. 4,375,573. Important members of the class of zeolites having a Constraint Index of from about 1 to 12 include ZSM-5, ZSM-11, ZSM-5/ZSM-11 intermediate, ZSM-12, ZSM-22, ZSM-23, ZSM-35, ZSM-38, ZSM-48, ZSM-50 and Zeolite Beta.

In all of the zeolites prepared in accordance with this invention, original alkali metal, alkaline earth metal or organic cations of the zeolites as synthesized can be replaced in accordance with techniques well known in the art, at least in part, by calcination and/or ion exchange, with other cations. Preferred replacing cations include metal ions, hydrogen ions, hydrogen precursor, e.g. ammonium, ions and mixtures thereof. Particularly preferred cations are those which render the zeolite catalytically active, especially for hydrocarbon conversion. These include hydrogen, rare earth metals and metals of Groups IA, IIA, IIIA, IVA, IB, IIB, IIIB, IVB and VIII of the Periodic Table of the Elements.

Typical ion exchange technique would be to contact the synthetic zeolite with a salt of the desired replacing cation or cations. Examples of such salts include the halides, e.g. chloride, nitrates and sulfates.

The zeolites synthesized hereby, including zeolites which have been ion exchanged as indicated above or catalysts comprising same can be beneficially treated by thermal treatment, e.g., calcination. Thermal treatment may be performed by heating one of said forms of synthesized zeolite or catalyst at a temperature of from about 200°C to about 870°C, preferably about 200°C to about 600°C, for a time of from about 1 minute to about 20 hours in an inert atmosphere of, for example, air or nitrogen, at subatmospheric, atmospheric or superatmospheric pressure. Atmospheric pressure for said thermal treatment is desired for reasons of convenience while subatmospheric pressure would allow for use of lower temperatures within the above range to provide like benefit. For any particular zeolite or catalyst being thermally treated, the maximum temperature should not exceed that at which said zeolite or catalyst begins to decompose.

In general, the present method for synthesizing a porous crystalline zeolite molecular sieve of any desired structure type comprises a first step of preparing a reaction mixture containing a source of alkali metal or alkaline earth metal ions, a source of organic cations, if necessary, a source of alumina, a source of silica and water. Such a reaction mixture will generally have a composition, in terms of mole ratios of oxides and ions within the following ranges:

|  | Useful | Preferred |
|---|---|---|
| $SiO_2/Al_2O_3$ | 3.5 or greater | 10-3000 |
| $H_2O/SiO_2$ | 5-1000 | 5-300 |
| $OH^-/SiO_2$ | 0.005-3.0 | 0.05-1.0 |
| $M^+/SiO_2$ | 0-10 | 0-1.0 |
| $R^+/SiO_2$ | 0-10 | 0-1.0 |

wherein $M^+$ represents said alkali metal or alkaline earth metal ions and $R^+$ represents said organic cations. In the method of this invention, the source of alumina is of limited solubility in the reaction mixture such that the source of alumina exhibits a Degree of Solubility of less than about 20 weight percent in water and less than about 90 weight percent in caustic solution. The reaction mixture ratio of $SiO_2/Al_2O_3$ is greater than or equal to 3.5, in general, and may, when desired, approach infinity. It should be understood that the $SiO_2/Al_2O_3$ ratios specified herein are based on the total amount of alumina present in the reaction mixture whether dissolved in the reaction mixture or whether present as an undissolved alumina source.

The second step of the present method involves maintaining the reaction mixture of the first step at a temperature of from about 60°C to about 350°C, preferably from about 100°C to about 200°C, and a pH of from about 7 to about 14, preferably from about 7.5 to about 13.5, until crystals of the porous crystalline zeolite molecular sieve are formed, usually from about 0.5 hour to about 500 hours, preferably from about 2 hours to about 150 hours.

The crystalline product is separated from the reaction medium, as by cooling the whole to about room temperature, filtering and water washing.

The reaction mixture composition can be prepared utilizing materials which supply the appropriate oxides. Such materials may include sodium silicate, silica hydrosol silica gel, silicic acid or sodium hydroxide as a silica source, an appropriate source of aluminum and an appropriate organic compound.

The reaction mixture will generally contain as a "template" or "directing agent" one or more organic compounds which contain an element of Group VA, such as nitrogen or phosphorus. The organic compound selected in many cases will direct zeolite synthesis toward one or another zeolite structure as desired. For example, primary organic amines containing from 2 to about 10 carbon atoms or organic ammonium compounds such as tetraalkylammonium compounds in which the alkyl contains from 2 to 5 carbon atoms will direct synthesis to the formation of aluminosilicates having the structure of zeolite ZSM-5 from the above reaction mixture under appropriate conditions. The quaternary compounds of tetrabutylammonium chloride or hydroxide may be used to direct synthesis under appropriate conditions to aluminosilicates which have the structure of ZSM-5/ZSM-11 intermediate or ZSM-11. Tetraethylammonium cation sources may be used to direct synthesis to aluminosilicates having the structure of ZSM-12 under appropriate conditions. An aluminosilicate having the structure of ZSM-23 may be synthesized from the reaction mixture by using pyrrolidine as the organic compound. Ethylenediamine as well as pyrrolidine will promote formation of a ZSM-35 structure and 2-(hydroxyalkyl)trialkylammonium compounds such as

2-(hydroxyethyl)trimethylammonium chloride will promote formation of a ZSM-38 structure.  If the reaction mixture contains a molar ratio of $C_2$-$C_{12}$ alkylamine/tetramethylammonium compound within the range of from about 1/1 to about 10/1, an aluminosilicate having the structure of ZSM-48 may be formed under appropriate conditions.

In addition to selection of organic template or directing agent, synthesis of zeolites of a given desired structure type may be promoted by use of selected reactant ratios and/or synthesis conditions.  For example, when the present method is used to synthesize zeolite ZSM-5, the reaction mixture from which it is to be crystallized will have a composition, in terms of mole ratios of oxides and ions, within the following ranges:

|  | Broad | Preferred |
|---|---|---|
| $SiO_2/Al_2O_3$ | 20-50,000 | 40-20,000 |
| $H_2O/SiO_2$ | 5-1,000 | 8-300 |
| $OH^-/SiO_2$ | 0.005-.03 | 0.01-0.2 |
| $M^+/SiO_2$ | 0-10 | 0.1-1.0 |
| $R^+/SiO_2$ | 0.01-10 | 0.1-1.0 |

wherein $R^+$ and $M^+$ are organic and metal cations which are used for ZSM-5 synthesis.

Reaction conditions here include a temperature of from about 80°C to about 200°C, preferably from about 100°C to about 180°C, for a time of from about 4 hours to about 720 hours, preferably from about 6 hours to about 360 hours and a pH of from about 7 to about 12.5.

When an aluminosilicate having the structure of zeolite ZSM-11 is desired by the present method, for example, the reaction mixture from which it is to be crystallized will have a composition, in terms of mole ratios of oxides and ions, within the following ranges:

|  | Broad | Preferred |
|---|---|---|
| $SiO_2/Al_2O_3$ | 20-50,000 | 30-3,000 |
| $H_2O/SiO_2$ | 5-1,000 | 8-300 |
| $OH^-/SiO_2$ | 0.005-0.3 | 0.01-0.2 |
| $M^+/SiO_2$ | 0-10 | 0.1-1.0 |
| $R^+/SiO_2$ | 0.01-10 | 0.1-1.0 |

wherein $R^+$ and $M^+$ are organic and metal cations which are used for ZSM-11 synthesis.

Crystallization temperature, pH and time are as indicated hereinbefore for preparation of aluminosilicate ZSM-5.

When an aluminosilicate having the structure of zeolite ZSM-12 is desired by the present method, for example, the reaction mixture from which it is to be crystallized will have a composition, in terms of mole ratios of oxides and ions, within the following ranges:

| | Broad | Preferred |
|---|---|---|
| $SiO_2/Al_2O_3$ | 20-50,000 | 40-3,000 |
| $H_2O/SiO_2$ | 2.5-1,000 | 5-200 |
| $OH^-/SiO_2$ | 0.1-0.4 | 0.15-0.25 |
| $M^+/SiO_2$ | 0.01-10 | 0.1-1.0 |
| $R^+/SiO_2$ | 0.01-10 | 0.1-1.0 |

wherein $R^+$ and $M^+$ are are organic and metal cations which are used for ZSM-12 synthesis.

Crystallization temperature, pH and time are as indicated hereinbefore for preparation of aluminosilicate ZSM-11.

When an aluminosilicate having the structure of zeolite ZSM-22 is desired by the present method, for example, the reaction mixture from which it is to be crystallized will have a composition, in terms of mole ratios of oxides and ions, within the following ranges:

| | Broad | Preferred |
|---|---|---|
| $SiO_2/Al_2O_3$ | 20- | 30-1000 |
| $H_2O/SiO_2$ | 10-200 | 15-100 |
| $OH^-/SiO_2$ | 0.1-2 | 0.1-0.8 |
| $M^+/SiO_2$ | 0-50 | 0-2 |
| $R^+/SiO_2$ | 0-50 | 0-2 |

wherein $R^+$ and $M^+$ are organic and metal cations which are used for ZSM-22 synthesis.

Reaction conditions here include a temperature of from about 100°C to about 250°C, preferably from about 140°C to about 200°C, for a time of from about 24 hours to about 6 days, preferably from about 24 hours to about 96 hours, and a pH of from about 11 to about 13.

When an aluminosilicate having the structure of zeolite ZSM-23 is desired by the present method, for example, the reaction mixture from which it is to be crystallized will have a composition, in terms of mole ratios of oxides and ions, within the following ranges:

|  | Broad | Preferred |
|---|---|---|
| $SiO_2/Al_2O_3$ | 30-50,000 | 40-200 |
| $H_2O/SiO_2$ | 5-50 | 15-30 |
| $OH^-/SiO_2$ | 0.005-0.5 | 0.02-0.2 |
| $M^+/SiO_2$ | 0.005-100 | 0.05-10 |
| $R^+/SiO_2$ | 0.01-10 | 0.1-1.0 |

wherein $R^+$ and $M^+$ are organic and metal cations which are used for ZSM-23 synthesis.

Reaction conditions here include a temperature of from about 130°C to about 205°C, preferably from about 140°C to about 180°C, for a time of from about 10 hours to about 150 hours, preferably from about 16 hours to about 72 hours, and a pH of from about 11.3 to about 12.5

When an aluminosilicate having the structure of zeolite ZSM-34 is desired by the present method, for example, the reaction mixture from which it is to be crystallized will have a composition, in terms of mole ratios of oxides and ions, within the following ranges:

|  | Broad | Preferred |
|---|---|---|
| $SiO_2/Al_2O_3$ | 10-100 | 10-70 |
| $H_2O/SiO_2$ | 6-100 | 6-64 |
| $OH^-/SiO_2$ | 0.3-1.0 | 0.3-0.8 |
| $M^+/SiO_2$ | 0.3-1.0 | 0.3-0.8 |
| $R^+/SiO_2$ | 0.1-1.0 | 0.1-0.5 |

wherein $R^+$ and $M^+$ are organic and metal cations which are used for ZSM-34 synthesis.

Reaction conditions here include a temperature of from about 80°C to about 175°C, preferably from about 90°C to about 160°C, for a time of from about 12 hours to about 200 days, preferably from about 12 hours to about 600 hours, and a pH of from about 11.5 to about 13.5.

When an aluminosilicate having the structure of zeolite ZSM-35 is desired by the present method, for example, the reaction mixture from which it is to be crystallized will have a composition, in terms of mole ratios of oxides and ions, within the following ranges:

|  | Broad | Preferred |
|---|---|---|
| $SiO_2/Al_2O_3$ | 8.8-200 | 12-60 |
| $H_2O/SiO_2$ | 5-100 | 7-70 |
| $OH^-/SiO_2$ | 0.05-0.5 | 0.07-0.49 |
| $M^+/SiO_2$ | 0.05-0.5 | 0.07-0.49 |
| $R^+/SiO_2$ | 0.3-3.0 | 0.6-1.5 |

wherein $R^+$ and $M^+$ are organic and metal cations which are used for ZSM-35 synthesis.

Reaction conditions here include a temperature of from about 85°C to about 200°C, preferably from about 130°C to about 175°C, for a time of from about 24 hours to about 2160 hours, preferably from about 24 hours to about 500 hours, and a pH of from about 11 to about 13.

When zeolite ZSM-38 is to be synthesized by the present method, for example, the reaction mixture from which it is to be crystallized will have a composition, in terms of mole ratios of oxides and ions, within the following ranges:

|  | Broad | Preferred |
|---|---|---|
| $SiO_2/Al_2O_3$ | 8.8-200 | 12-60 |
| $H_2O/SiO_2$ | 5-100 | 6-50 |
| $OH^-/SiO_2$ | 0.05-0.5 | 0.07-0.49 |
| $M^+/SiO_2$ | 0.05-0.5 | 0.07-0.49 |
| $R^+/SiO_2$ | 0.05-1.0 | 0.06-0.5 |

wherein $R^+$ and $M^+$ are organic and metal cations which are used for synthesis of ZSM-38.

Reaction conditions here include those for preparation of zeolite ZSM-35, hereinbefore described.

When zeolite ZSM-45 is desired by the present method, for example, the reaction mixture from which it is to be crystallized will have a composition, in terms of mole ratios of oxides and ions, within the following ranges:

|            | Broad | Preferred |
|------------|-------|-----------|
| $SiO_2/Al_2O_3$ | 10-150 | 15-80 |
| $H_2O/SiO_2$ | 6-100 | 6-64 |
| $OH^-/SiO_2$ | 0.3-1.0 | 0.3-0.8 |
| $M^+/SiO_2$ | 0.05-1.0 | 0.1-0.5 |
| $R^+/SiO_2$ | 0.05-1.0 | 0.1-0.5 |

wherein $R^+$ and $M^+$ are organic and metal cations which are used for synthesis of ZSM-45.

Reaction conditions here include a temperature of from about 80°C to about 350°C, preferably from about 100°C to about 200°C, for a time of from about 12 hours to about 150 days, preferably from about 48 hours to about 360 hours, and a pH of from about 9 to about 13.

When an aluminosilicate having the structure of zeolite ZSM-48 is desired by the present method, for example, the reaction mixture from which it is to be crystallized will have a composition, in terms of mole ratios of oxides and ions, within the following ranges:

|            | Broad | Preferred |
|------------|-------|-----------|
| $SiO_2/Al_2O_3$ | 20-50,000 | 40-3,000 |
| $H_2O/SiO_2$ | 5-1000 | 8-300 |
| $OH^-/SiO_2$ | 0.005-0.3 | 0.01-0.2 |
| $M^+/SiO_2$ | 0-10 | 0.1-1.0 |
| $R^+/SiO_2$ | 0.01-10 | 0.1-1.0 |

wherein $R^+$ and $M^+$ are organic and metal cations which are used for synthesis of ZSM-48.

Reaction conditions here include a temperature of from about 80°C to about 350°C, preferably from about 100°C to about 200°C, for a time of from about 12 hours to about 720 hours, preferably from about 48 hours to about 360 hours, and a pH of from about 7.5 to about 13.

When an aluminosilicate having the structure of zeolite ZSM-50 is desired by the present method, for example, the reaction mixture from which it is to be crystallized will have a composition, in terms of mole ratios of oxides and ions, within the following ranges:

F-2123                    -22-

|  | Broad | Preferred |
|---|---|---|
| $SiO_2/Al_2O_3$ | 20-3,000 | 30-90 |
| $H_2O/SiO_2$ | 5-1,000 | 6-50 |
| $OH^-/SiO_2$ | 0.1-2.0 | 0.1-0.6 |
| $M^+/SiO_2$ | 0.01-10 | 0.1-1.0 |
| $R^+/SiO_2$ | 0.01-10 | 0.1-1.0 |

wherein $R^+$ and $M^+$ are organic and metal cations which are used for synthesis of ZSM-50.

Reaction conditions here include a temperature of from about 80°C to about 300°C, preferably from about 100°C to about 200°C, for a time of from about 2 hours to about 720 hours, preferably from about 48 hours to about 360 hours, and a pH of from about 8 to about 13.

When an aluminosilicate having the structure of zeolite Beta is desired by the present method, for example, the reaction mixture from which it is to be crystallized will have a composition, in terms of mole ratios of oxides and ions, within the following ranges:

|  | Broad | Preferred |
|---|---|---|
| $SiO_2/Al_2O_3$ | 10-3,000 | 10-200 |
| $H_2O/SiO_2$ | 1-1000 | 2-75 |
| $OH^-/SiO_2$ | 0.1-2.0 | 0.1-0.6 |
| $M^+/SiO_2$ | 0-10 | 0.01-1.0 |
| $R^+/SiO_2$ | 0.01-10 | 0.1-1.0 |

wherein $R^+$ and $M^+$ are organic and metal cations which are used for synthesis of Zeolite Beta.

Reaction conditions here include a temperature of from about 85°C to about 200°C, preferably from about 130°C to about 175°C, for a time of from about 24 hours to about 1200 hours, preferably from about 24 hours to about 500 hours, and a pH of from about 8 to about 13.5.

When the present method is used to synthesize zeolite Y, for example, the reaction mixture from which it is to be crystallized will have a composition, in terms of mole ratios of oxides, within the following ranges:

|            | Broad    | Preferred |
|------------|----------|-----------|
| $SiO_2/Al_2O_3$ | 3.5-40 | 4-20 |
| $H_2O/SiO_2$ | 5-100 | 6-50 |
| $OH^-/SiO_2$ | 0.05-2 | 0.1-0.9 |
| $M^+/SiO_2$ | 0.05-2 | 0.1-0.9 |

wherein $M^+$ is a metal cation.

Reaction conditions here include a temperature of from about 20°C to about 150°C, preferably from about 70°C to about 100°C, for a time of from about 24 hours to about 28 days, preferably from about 48 hours to about 14 days, and a pH of from about 10.5 to about 13.5.

When an aluminosilicate having the structure of synthetic offretite is desired by the present method, for example, the reaction mixture from which it is to be crystallized will have a composition, in terms of mole ratios of oxides and ions, within the following ranges:

|            | Broad    | Preferred |
|------------|----------|-----------|
| $SiO_2/Al_2O_3$ | 2-100 | 10-50 |
| $H_2O/SiO_2$ | 5-100 | 6-50 |
| $OH^-/SiO_2$ | 0.1-2 | 0.3-1.4 |
| $M^+/SiO_2$ | 0.1-2 | 0.3-1.4 |
| $R^+/SiO_2$ | 0-2 | 0-0.9 |

wherein $M^+$ is a metal cation and $R^+$ is tetramethylammonium.

Reaction conditions here include a temperature of from about 20°C to about 200°C, preferably from about 40°C to about 120°C, for a time of from about 24 hours to about 20 days, preferably from about 48 hours to about 18 days, and a pH of from about 12 to about 14.

When an aluminosilicate having the structure of synthetic erionite is desired by the present method, for example, the reaction mixture from which it is to be crystallized will have a composition, in terms of mole ratios of oxides and ions, within the following ranges:

| | Broad | Preferred |
|---|---|---|
| $SiO_2/Al_2O_3$ | 15-50 | 20-30 |
| $H_2O/SiO_2$ | 5-100 | 6-50 |
| $OH^-/SiO_2$ | 0.05-2 | 0.1-0.9 |
| $M^+/SiO_2$ | 0.05-2 | 0.1-0.9 |
| $R^+/SiO_2$ | 0.01-1 | 0.01-0.5 |

wherein $R^+$ and $M^+$ are organic and metal cations. $R^+$ may be derived from a benzyltrimethylammonium compound, such as the chloride.

Reaction conditions here include a temperature of from about 20°C to about 200°C, preferably from about 30°C to about 130°C, for a time of from about 24 hours to about 120 days, preferably from about 24 hours to about 45 days, and a pH of from about 11 to about 13.

Another way to direct synthesis of a desired aluminosilicate molecular sieve having a particular crystal structure is to provide seed crystals of the desired structure, e.g. aluminosilicate zeolite of ZSM-5 structure, in the reaction mixture initially. This may be facilitated by providing at least about 0.01 percent, preferably at least about 0.1 percent and still more preferably at least about 1 percent seed crystals of the desired aluminosilicate (based on total reaction mixture weight).

The zeolite crystals prepared by the instant invention can be shaped into a wide variety of particle sizes. Generally speaking, the particles can be in the form of a powder, a granule, or a molded product, such as an extrudate having particle size sufficient to pass through a 2 mesh (Tyler) screen and be retained on a 400 mesh (Tyler) screen. In cases where the catalyst is molded, such as by extrusion, the crystals can be extruded before drying or partially dried and then extruded.

It may be desired to incorporate the zeolite crystals with another material resistant to the temperatures and other conditions employed in various organic conversion processes. Such materials include active and inactive material and synthetic or naturally occurring zeolites as well as inorganic materials such as clays, silica and/or metal oxides, e.g. alumina. The latter may be either naturally occurring or in the form of gelatinous precipitates or gels including mixtures of silica and metal oxides. Use of a material in conjunction with the synthesized crystal, i.e. combined therewith, which is active, tends to alter the conversion and/or selectivity of the overall catalyst in certain organic conversion processes. Inactive materials suitably serve as diluents to control the amount of conversion in a given process so that products can be obtained economically and orderly without employing other means for controlling the rate of reaction. These materials may be incorporated into naturally occurring clays, e.g. bentonite and kaolin, to improve the crush strength of the catalyst under commercial operating conditions. Said materials, i.e. clays, oxides, etc., function as binders for the catalyst. It may be desirable to provide a catalyst having good crush strength because in commercial use it is desirable to prevent the catalyst from breaking down into powder-like materials. These clay binders have been employed normally only for the purpose of improving the crush strength of the overall catalyst.

Naturally occurring clays which can be composited with the zeolite include the montmorillonite and kaolin family, which families include the subbentonites, and the kaolins commonly known as Dixie, McNamee, Georgia and Florida clays or others in which the main mineral constituent is halloysite, kaolinite, dickite, nacrite, or anauxite. Such clays can be used in the raw state as originally mined or initially subjected to calcination, acid treatment or chemical modification. Binders useful for compositing with the present crystal also include inorganic oxides, notably alumina.

In addition to the foregoing materials, the crystalline aluminosilicate zeolite can be composited with a porous matrix material such as silica-alumina, silica-magnesia, silica-zirconia, silica-thoria, silica-beryllia, silica-titania as well as ternary compositions such as silica-alumina-thoria, silica-alumina-zirconia silica-alumina-magnesia and silica-magnesia-zirconia. The relative proportions of finely divided crystalline material and inorganic oxide gel matrix vary widely, with the crystal content ranging from about 1 to about 90 percent by weight and more usually, particularly when the composite is prepared in the form of beads, in the range of about 2 to about 80 weight percent of the composite.

Employing a catalytically active form of a particular porous crystalline zeolite molecular sieve material synthesized by the method of this invention, e.g. ZSM-5, as a catalyst component, said catalyst possibly containing additional hydrogenation components, reforming stocks can be reformed employing a temperature of from about 370°C to about 540°C, a pressure of from about 100 psig to about 1000 psig (791 kPa to 6996 kPa), preferably from about 200 psig to about 700 psig (1480 kPa to 4928 kPa), a liquid hourly space velocity is from about about 0.1 to about 10, preferably from about 0.5 to about 4, and a hydrogen to hydrocarbon mole ratio of from about 1 to about 20, preferably from about 4 to about 12.

A catalyst comprising a particular zeolite synthesized hereby, e.g. ZSM-5, ZSM-11 and Beta, can also be used for hydroisomerization of normal paraffins, when provided with a hydrogenation component, e.g. platinum. Such hydroisomerization is carried out at a temperature of from about 90°C to about 375°C, preferably from about 145°C to about 290°C, with a liquid hourly space velocity of from about 0.01 to about 2, preferably from about 0.25 to about 0.50, and with a hydrogen to hydrocarbon mole ratio of from about 1:1 to about 5:1. Additionally, such a catalyst can be used for olefin or aromatic isomerization, employing a temperature of from about 200°C to about 480°C.

Such a catalyst, e.g. ZSM-5, ZSM-11 and Beta, can also be used for reducing the pour point of gas oils. This reaction is carried out at a liquid hourly space velocity of from about 10 to about 30 and at a temperature of from about 425°C to about 595°C.

Other organic compound conversion reactions which can be carried out employing a catalyst comprising a zeolite molecular sieve prepared by the method of this invention containing a metal, e.g. platinum, include hydrogenation-dehydrogenation reactions and desulfurization reactions, olefin polymerization (oligomerization) and other organic compound conversions, such as the conversion of alcohols (e.g. methanol) or ethers (e.g. dimethylether) to hydrocarbons, and the alkylation of aromatics (e.g. benzene) in the presence of an alkylating agent (e.g. ethylene).

In order to more fully illustrate the nature of the invention and the manner of practicing same, the following examples are presented.  In the examples, whenever Alpha Value is examined, it is noted that the Alpha Value is an approximate indication of the catalytic cracking activity of the catalyst compared to a standard catalyst and it gives the relative rate constant (rate of normal hexane conversion per volume of catalyst per unit time).  It is based on the activity of the highly active silica-alumina cracking catalyst taken as an Alpha of 1 (Rate Constant = 0.016 sec$^{-1}$).  In the case of zeolite HZSM-5, for example, only 174 ppm of tetrahedrally coordinated aluminum are required to provide an Alpha Value of 1.  The Alpha Test is described in U.S. Patent 3,354,078 and in The Journal of Catalysis, Vol. IV, pp. 522-529 (August 1965).

### EXAMPLE 1

A number of individual alumina sources were tested for Degree of Solubility in accordance with the procedure and formula herinbefore described for both water and caustic solution solubility.  The tested alumina sources were:

A. Primarily spray-dried and milled transition alumina with traces of alpha monohydrate alumina.

B. Spray dried alpha monohydrate alumina.

C. Dried alpha monohydrate alumina.

D. Rotary kiln dried alpha monohydrate alumina.

E. Beta trihydrate and alpha monohydrate aluminas in the form of wet filter cake.

F. Primarily transition alumina with traces of beta trihydrate and alpha monohydrate alumina.

G. Dried alpha monohydrate alumina.

H. Primarily gamma alumina with traces of delta alumina.

Five grams of each source were individually mixed and slurried with 100 grams of distilled water, heated to 100°C and maintained in a slurried condition at 100°C for 24 hours.  Also, five grams of each source were individually mixed and slurried with 100 grams of 5 weight percent sodium hydroxide solution (prepared by dissolving 5 grams of anhydrous sodium hydroxide in 95 grams of distilled water), heated to 100°C and maintained in a slurried
condition at 100°C for 24 hours. The mixtures were then filtered at
100°C and the filtrates were analyzed for aluminum ion content. The
resulting filter cakes were dried and weighed. Results of this
testing were as listed below:

|  | Degree of Solubility, Wt. % | |
| --- | --- | --- |
| Alumina Source | Water Solution | Caustic Solution |
| A | - | 40.4 |
| B | less than 0.2 | 31.4 |
| C | less than 0.2 | 39.8 |
| D | less than 0.2 | 28.4 |
| E | less than 0.2 | 31.2 |
| F | less than 0.2 | 45.8 |
| G | less than 0.2 | 47.2 |
| H | 4.2 | 49.2 |

### EXAMPLE 2

Synthetic offretite was made by the known method of preparing
a reaction mixture solution comprising 1.0 part sodium aluminate
(Degree of Solubility 100% in either water or caustic solution), 2.5
parts sodium hydroxide (98 wt. %), 1.4 parts potassium hydroxide (86
wt. %), 16.9 parts distilled water and 24.9 parts colloidal silica (30
wt. % $SiO_2$). The mixture was stirred for 15 minutes prior to
placing it in polypropylene containers, which were placed in a water
bath (90.5°C) for 14 days.

The resulting zeolite was identified by X-ray diffraction
analysis to be synthetic offretite of 70% crystallinity. Chemical
analysis of the product zeolite proved it to be composed of:

| | |
| --- | --- |
| Na, wt. % | 2.3 |
| K,  wt. % | 9.0 |
| N, wt. % | 0.15 |
| $SiO_2/Al_2O_3$, molar | 7.0 |

Scanning Electron Micrograph analysis of the product
synthetic offretite showed it to have a typical morphology expected of
offretite, i.e. nonuniform trapazoidal rods about 5 microns in length.

## EXAMPLE 3

Synthetic offretite was made by the present method for comparison with the offretite product made in Example 2. Here a reaction mixture solution was prepared by mixing 1.0 part alumina source A (see Example 1), 3.2 parts sodium hydroxide (97 wt. %), 1.6 parts potassium hydroxide (86 wt. %), 19.3 parts distilled water and 28.3 parts colloidal silica (30 wt. % $SiO_2$). The mixture, having a pH of about 13.5, was stirred for 15 minutes prior to placing it into polypropylene containers, which were placed in a water bath (90.5°C) for 14 days.

The resulting zeolite was identified by X-ray diffraction analysis to be synthetic offretite of 70% crystallinity. Chemical analysis of the product zeolite proved it to be composed of:

| | |
|---|---|
| Na, wt. % | 2.3 |
| K, wt. % | 9.0 |
| N, wt. % | 0.04 |
| $SiO_2/Al_2O_3$, molar | 6.8 |

Scanning Electron Micrograph analysis of the product synthetic offretite showed it to have a uniform hexagonal rod structure of about 10 microns in length which is not typical morphology for offretite.

## EXAMPLE 4

A caustic solution was prepared by dissolving 470 grams of NaOH (pellets), 2500 grams of "pre-reacted organics" in 20 pounds (9.1 kg) of water. The pre-reacted organics were prepared by reacting 36.04 parts of methylethylketone, 22.04 parts of tri-n-propylamine, 18.95 parts of n-propylbromide in 123 parts of water at 104°C for about 6 hours. Excess organics were flashed off by raising the temperature of the reactor to 160°C. The remaining aqueous phase was cooled and used as "pre-reacted organics". The caustic solution was charged to an autoclave followed by adding 119 grams of alumina source F of low solubility (see Example 1). The alumina source was found to contain mainly transition alumina and traces of beta trihydrate and alpha monohydrate. The mixture was kept at room temperature and agitated at 200 rpm. Ten and a half pounds of precipitated hydrated

$SiO_2$ containing about 6 weight percent free water and 4.5 weight percent bound water of hydration and having a particle size of about 0.02 micron were gradually added. The mixture, having a pH of about 10.5, was agitated for 2 hours to obtain a homogeneous mixture. Crystallization conditions included a temperature of 100°C, autogeneous pressure and 90 rpm agitation. After 70 hours, the product zeolite was identified by X-ray diffraction to be 100% crystalline zeolite ZSM-5. Crystal size was measured by Scanning Electron Microscopy to be in the range of from 0.05 to 0.1 micron, which is larger than obtained by known methods of ZSM-5 synthesis using readily soluble alumina sources.

### EXAMPLE 5-11

Seven separate preparations of zeolite ZSM-5 were conducted from reaction mixtures containing different sources of alumina ranging from alpha monohydrate, beta trihydrate, transition alumina and mixtures thereof. The alumina sources were added in amounts expected to give products with silica/alumina mole ratios of from 55 to 70. In each preparation, the reaction mixture contained "pre-reacted organics" as described in Example 4. The reaction mixtures were comprised of:

    4.7  grams NaOH

    50   grams pre-reacted organics

    63.5 grams water

    0.83 gram alumina source

    47.7 grams precipitated hydrated $SiO_2$ as used in Example 4.

The reaction mixtures were crystallized statically in polypropylene jars at 100°C. Crystallinity was measured after 6 days and 11 days. The product zeolites were identified by X-ray diffraction to be ZSM-5. Alpha Values and crystal sizes for the product zeolites were also determined.

Alumina sources and zeolite product particulars are shown in Table 1.

## Table 1

| Example No. | 5 | 6 | 7 | 8 | 9 | 10 | 11 |
|---|---|---|---|---|---|---|---|
| Alumina Source* | 1+2+3 | 1+2 | 1 | 1+3 | 1 | 1 | 1 |
| **Product Composition** | | | | | | | |
| SiO$_2$, wt. % | 81.7 | 80.9 | 79 9 | 79.4 | 78.7 | 78.0 | 79.3 |
| Al$_2$O$_3$, wt. % | 2.15 | 1.6 | 2.16 | 1.94 | 2.1 | 2.19 | 2.11 |
| Na, wt. % | 1.12 | 1.0 | 1.19 | 1.2 | 1.1 | 1.06 | 1.05 |
| Ash (1000°C), wt. % | 84.8 | 85.0 | 84.9 | 85.7 | 85.0 | 85.0 | 84.8 |
| SiO$_2$/Al$_2$O$_3$, molar ratio | 64.6 | 86.0 | 62.9 | 69.6 | 63.7 | 60.5 | 63.9 |
| **Crystallinity** | | | | | | | |
| % ZSM-5 after | | | | | | | |
| 6 days | 65 | 60 | 60 | 55 | 60 | 60 | 65 |
| 11 days | 95 | 95 | 100 | 90 | 95 | 95 | 95 |
| **Alpha Value at** | | | | | | | |
| 538°C | 50 | 62 | 33 | 65 | 45 | 27 | 45 |
| Residual Sodium, wt. % | 0.03 | 0.03 | 0.06 | 0.04 | 0.05 | 0.04 | 0.03 |
| Crystal Size, microns | 1-3 | 1-3 | 1-3 | 1-3 | 1-3 | 1-3 | 1-3 |

*Alumina Sources Used:

1 = Alpha Monohydrate

2 = Beta Trihydrate

3 = Transition Alumina

It is noted from the data of Table 1 that the silica/alumina mole ratios of the product zeolites from Examples 5 through 11 ranged from 60.5 to 86. It is also noted that the Alpha Values obtained, i.e. from 27 to 65, are expected from zeolite ZSM-5 having a much higher silica/alumina mole ratio; i.e. as high as about 200.

## EXAMPLES 12-17

Examples 12-15 were attempts to synthesize zeolite ZSM-34 with a high silica/alumina mole ratio using conventional reactants but reducing the amount of sodium aluminate (the alumina source having a Degree of Solubility of 100%). In addition, ZSM-34 seeds were added to the reaction media to "force" the synthesis of ZSM-34. Example 12 represents the base case in which a 100% crystalline ZSM-34 zeolite was obtained having a silica/alumina mole ratio of 11.3. The other three preparations containing lesser amounts of alumina source produced ZSM-34, but at significantly reduced crystallinity. The silica/alumina mole ratios did not increase beyond 17.7.

Examples 16 and 17 were evaluations of utility of alumina source F (see Example 1) in synthesis corresponding to Example 12-15. Example 16 was equivalent to Example 15, except that the alumina source was changed. A crystalline material was formed which had a similar X-ray pattern to ZSM-34 or erionite (a similar small pore zeolite both of which may be defined as having a Constraint Index of greater than 12) but also had significant peak intensity changes which may indicate a different zeolite. The silica/alumina mole ratio of this new species was 34.7 which is about twice as high as any ratio obtained from previous ZSM-34 syntheses.

Example 17 is a further example of using alumina source F (see Example 1). In this preparation, no ZSM-34 seeds were introduced. A crystalline material was obtained. The X-ray pattern of the Example 17 product resembled that of the Example 16 product, but had more definition to the major intensity peaks (perhaps due to improved crystallinity).

Synthesis and product analysis particulars for Examples 12 through 17 are presented in Table 2.

TABLE 2

| Example No. | Reaction Mixture Composition (Grams) | | | | | | Product Composition | |
|---|---|---|---|---|---|---|---|---|
| | Organic* | Colloidal Silica | NaOH | KOH | H₂O** | Alumina | SiO₂/Al₂O₃, mole ratio | X-Ray Crystallinity and Description |
| 12 | 200 0 | 684.2 | 25.7 | 23.4 | 952.7 | 60.4 | 11.3 | 100% ZSM-34 |
| 13 | 200.0 | 684.2 | 37.4 | 23.4 | 952.7 | 30.2 | 14.0 | 50% ZSM-34 |
| 14 | 200.0 | 684.2 | 43.3 | 23.4 | 952.7 | 15.1 | 17.7 | 55% ZSM-34 |
| 15 | 200.0 | 684.2 | 25.7 | 56.8 | 952.7 | 7.6 | 6.4 | 80% ZSM-34 |
| 16 | 200.0 | 684.2 | 25.7 | 56.8 | 952.7 | 3.7 | 34.7 | ZSM-34 type material with changes in the relative intensities of the lines. |
| 17 | 200.0 | 684.2 | 25.7 | 56.8 | 952.7 | 3.7 | 68.2 | |

* The organic in each of these examples was choline chloride.

** Includes water from the silica source.

## EXAMPLES 18-22

Example 18 represents synthesis of zeolite Y by conventional method, with sodium aluminate as the source of alumina (Degree of Solubility = 100%). Examples 19 and 20 show synthesis of zeolite Y by the present method with source F the alumina source (see Example 1). Example 19 failed to provide crystalline product, believed in part due to the failure to compensate for alkaline content of the reaction mixture. Example 20 resulted in zeolite Y product using source F alumina with the alkaline content compensated. However the crystallization period was three times longer than observed in Example 18. Examples 21 and 22 show attempted synthesis of zeolite Y by the present method with source A the alumina source. In both cases zeolite Y was not produced, even after three weeks. As noted in Example 1, alumina source A is less soluble than alumina source F which may in part be responsible for failure to produce the desired zeolite Y product. Normal crystallization was attempted in these examples at 100°C for 1 week at a reaction mixture pH of about 14.0 in a static system. The synthesis and product analyses particulars for Examples 18 through 22 are presented in Table 3.

TABLE 3

| Example No. | Reaction Mixture Composition (Grams) | | | | | Product Composition | |
|---|---|---|---|---|---|---|---|
| | Organic | Colloidal Silica | NaOH | H₂O* | Alumina | $SiO_2/Al_2O_3$, mole ratio | X-Ray Crystallinity and Description |
| 18 | None | 1910 | 137.7 | 2027.6 | 230.9 | 5.7 | 95% Y type material |
| 19 | None | 1910 | 137.7 | 2027.6 | 138.3 | -- | Amorphous |
| 20 | None | 1910 | 227.2 | 2027.6 | 139.5 | 5.8 | 100% Y type material |
| 21 | None | 1910 | 227.2 | 2027.6 | 202.8 | -- | Mixture of dense phase Zeolite P and Zeolite S |
| 22 | None | 1910 | 227.2 | 2027.6 | 202.8 | -- | Mixture of dense phase Zeolite P and Zeolite S |

* Includes water from the silica source.

## EXAMPLES 23 and 24

Two experiments were conducted for synthesis of offretite. Example 23 utilized an alumina source of sodium aluminate which has a Degree of Solubility of 100% in either water or caustic solution. Example 24 utilized alumina source F (see Example 1) which has a Degree of Solubility of less than 0.2% in water solution and 45.8% in caustic solution. The product of Example 23 was 70% crystalline synthetic offretite. The product of Example 24 was 100% crystalline synthetic offretite type material which differed in X-ray diffraction in its peak intensities from the product of Example 23. Both experiments were conducted under static conditions at a crystallization temperature of 100°C and a reaction mixture pH of 13.5 Reaction mixture particulars for Examples 23 and 24 appear in Table 4, hereinafter.

## EXAMPLE 25

A reaction mixture comprising the ingredients listed in Table 4 was prepared with alumina source F (see Example 1). It was maintained at a pH of about 12 and a temperature of 149°C for 72 hours. The resulting crystalline product was determined to be 105% crystalline ZSM-5 by X-ray diffraction analysis. Chemical analysis of the product zeolite indicated a $SiO_2/Al_2O_3$ mole ratio of 45.3.

### TABLE 4

| Example No. | Reaction Mixture Composition (Grams) | | | | | |
|---|---|---|---|---|---|---|
| | Organic | Colloidal Silica | NaOH | KOH | $H_2O$* | Alumina |
| 23 | None | 2314 | 228.7 | 109.7 | 3194.5 | 93.1 |
| 24 | None | 2314 | 228.7 | 109.7 | 3194.5 | 55.8 |
| 25 | Pyrrolidine (58.2 g) | 553.8 | 1.1 | 0 | 1190.9 | 2.6 |

* Includes water from the silica source.

## EXAMPLE 26

In a 3 liter beaker, 110.4 grams of 50% NaOH were combined with 2383 grams of de-ionized water. A 352.2 gram quantity of tetraethylammonium bromide (TEA Bromide)(100%) was then added to form a clear homogeneous solution. Fifteen grams of alumina source F (see Example 1) were then added. A 415.5 gram quantity of precipitated hydrated $SiO_2$ containing about 6 wt. % free $H_2O$ and about 4.5 wt. % bound $H_2O$ of hydration and having a particle size of about 0.02 micron was then added and the whole mixed until a homogeneous slurry was obtained. Approximately 1500 cc (1636 grams) of this mixture was transferred to a 2 liter Parr autoclave. The pH of this mixture was 12.7 at 23°C. After pressure testing, the temperature of the autoclave was raised to 121°C. After stirring for 381.25 hours at 121°C, a product whose pH was 11.6 at 30°C and whose density was 1.12 g/cc was obtained. X-ray diffraction showed the washed, dried powder obtained at this point to be 80% zeolite Beta relative to a zeolite Beta standard. After 468.25 hours, 90% zeolite Beta was evidenced. The molar composition of the starting gel was:

$SiO_2/Al_2O_3$ = 51.2; $Na_2O/SiO_2$ = 0.178; $H_2O/SiO_2$ = 22.9; $OH^-/SiO_2$ = 0.23; $(TEA)_2O/SiO_2$ = 0.14; and $(TEA^+)/(TEA^+ + Na^+)$ = 0.55.

## EXAMPLES 27 and 28

Since zeolite ZSM-34 exhibits activity as a catalyst component for conversion of methanol to olefins, and since ZSM-34 synthesized by conventional methods, i.e., with a fully soluble source of alumina, is actually so active for that conversion that it cokes up rapidly as a result, it was of interest to examine Alpha Values of such catalyst comprising ZSM-34 synthesized by the present method. It is believed that Alpha Values for such catalysts of less than about 50, preferably less than about 40, would retain conversion ability while providing longer cycles.

It was noted that the silica/alumina mole ratio of the new species of zeolite ZSM-34 prepared in Example 16 was 34.7, about twice as high as for conventionally synthesized ZSM-34. It was speculated that this higher silica/alumina ratio would temper the catalyst activity of the new ZSM-34 in the conversion of methanol to olefins. To test this speculation and to demonstrate the utility of the present method for tailoring catalyst activity, two ZSM-34 catalyst samples were prepared. The first, Example 27, was prepared by mixing 65 parts by weight zeolite ZSM-34 from Example 12 with 35 parts by weight alumina binder. Enough water was added to the mixture to allow its extrusion into 1/16-inch extrudates. This was a conventionally prepared ZSM-34 catalyst material.

The second ZSM-34 sample, Example 28, was prepared by mixing 65 parts by weight zeolite ZSM-34 from Example 16 with 35 parts by weight alumina binder. Again, enough water was added to permit extrusion into 1/16-inch extrudates.

Both catalyst preparations were calcined in nitrogen at 538°C for three hours, washed at room temperature with an ammonium nitrate solution, and then calcined in air at 538°C for three hours. Each catalyst was then subjected to the Alpha Test, indicating an Alpha Value for the conventionally prepared ZSM-34 catalyst, Example 27, of 107, and an Alpha Value for the ZSM-34 catalyst of Example 28 of 8. The utility of the present method to tailor catalyst activity for a particular application was thereby demonstrated.

F-2123 -39- **0127399**

CLAIMS

1. A method for synthesizing a porous crystalline zeolite molecular sieve, which method comprises the steps of

A) preparing an aqueous reaction mixture having a composition, in terms of mole ratios of oxides and ions, within the following ranges:

$$SiO_2/Al_2O_3 = \text{at least } 3.5$$
$$H_2O/SiO_2 = 5 \text{ to } 1,000$$
$$OH^-/SiO_2 = 0.005 \text{ to } 3.0$$
$$M^+/SiO_2 = 0 \text{ to } 10$$
$$R^+/SiO_2 = 0 \text{ to } 10$$

wherein $M^+$ represents alkali metal or alkaline earth metal ions and $R^+$ represents organic cations containing a Group VA element, said $Al_2O_3$ being provided at least in part by a deliberately added alumina source of limited solubility in said reaction mixture, said alumina source exhibiting a Degree of Solubility of less than 20 weight percent in water and less than 90 weight percent in caustic solution, and

B) maintaining said reaction mixture at a temperature of from 60°C to 350°C and at a pH of from 7 to 14.0 until crystals of said porous crystalline zeolite molecular sieve are formed.

2. A method according to Claim 1 wherein said reaction mixture has a composition, in terms of mole ratios of oxides and ions, within the following ranges:

$$SiO_2/Al_2O_3 = 5 \text{ to } 3,000$$
$$H_2O/SiO_2 = 5 \text{ to } 300$$
$$OH^-/SiO_2 = 0.05 \text{ to } 1.0$$
$$M^+/SiO_2 = 0 \text{ to } 1.0$$
$$R^+/SiO_2 = 0 \text{ to } 1.0$$

3. A method according to Claim 1 or Claim 2 wherein the source of $Al_2O_3$ is selected from high temperature transition alumina, transition alumina, trihydrated alumina, monohydrated alumina and mixtures thereof, said trihydrated and monohydrated alumina sources being free from solubilizing pretreatment with alkali metal or alkaline earth metal hydroxide or mineral acid.

4.  A method according to Claim 1 wherein the source of $Al_2O_3$ exhibits a Degree of Solubility of less than 5 weight percent in water and less than 50 weight percent in caustic solution.

5.  A method according to Claim 1 wherein the zeolite molecular sieve produced has a silica/alumina mole ratio of at least 12 and a constraint index of from 1 to 12.

6.  A method according to Claim 1 wherein the zeolite molecular sieve produced is ZSM-5, ZSM-11, ZSM-5/ZSM-11 intermediate, ZSM-12, ZSM-22, ZSM-23, ZSM-34, ZSM-35, ZSM-38, ZSM-45, ZSM-48, ZSM-50, Beta, synthetic offretite, synthetic erionite, or zeolite Y.

7.  A method according to any of Claims 1 to 6 further comprising the step of replacing original ions of said zeolite molecular sieve, at least in part, with an ion or mixture of ions selected from hydrogen and hydrogen precursors, rare earth metals, or metals from Groups IA, IIA, IIIA, IVA, IB, IIB, IIIB, IVB, VIB or VIII of the Periodic Table of Elements.

8.  A method according to any of Claims 1 to 7 which comprises the additional step of heating the zeolite molecular sieve produced at a temperature of from 200°C to 870°C.

9.  The porous crystalline zeolite molecular sieve material synthesized by the method of any of Claims 1 to 8.

10. Use of the porous crystalline zeolite molecular sieve material synthesized by the method of any of Claims 1 to 8 as a catalyst to promote the catalytic conversion of an organic compound.

3262H